# FASCICULE DE BREVET EUROPEEN

(11) **EP 0 685 796 B1**
(45) Date de publication et mention de la délivrance du brevet: **28.06.2000**
(21) Numéro de dépôt: 95401175.5
(22) Date de dépôt: 19.05.1995
(51) Int. Cl.: G06F 12/06

(54) **Dispositif pour l'optimisation des performances d'un processeur**
Anordnung zur Optimierung der Leistung eines Prozessors
Device for optimizing the performance of a processor

(30) Priorité: 27.05.1994 FR 9406580
(43) Date de publication de la demande: 06.12.1995
(73) Titulaire: SEXTANT AVIONIQUE, 92366 Meudon la Forêt Cédex (FR)
(72) Inventeur: Ducateau, Michel, F-28210 Nogent le Roi (FR)
(74) Mandataire: de Saint-Palais, Arnaud Marie

(56) Documents cités:
- WO-A-89/05488
- GB-A- 2 272 088
- ELECTRONIQUE INDUSTRIELLE, no. 111, Septembre 1986 PARIS, FR, page 65 A. D. E. BROWN 'Simplification du système mémoire d'un TMS32010 avec des EPROM'

## Description

La présente invention concerne un dispositif pour l'optimisation des performances d'un processeur avec utilisation de mémoires mortes à temps d'accès lent pour le programme applicatif associé à un processeur.

On sait qu'avec les nouveaux processeurs, par exemple de type 88100, SPARC 601, DSP 320CXX ..., la pleine performance du processeur est obtenue dès lors que la mémoire et, plus particulièrement, la mémoire instruction, est capable de fournir une instruction à chaque cycle horloge. Si tel n'est pas le cas, la performance maximale du processeur est divisée par le nombre de cycles nécessaires pour accéder à une instruction (soit, par exemple une puissance divisée par 2 si la mémoire répond en 2 cycles).

Ainsi, pour qu'un processeur fonctionnant à une fréquence de 25 MHz (c'est-à-dire, avec des cycles de 40 ns), soit pleinement performant, il faut utiliser des mémoires instructions capables de fournir des instructions dans une gamme de temps allant de 20 à 25 ns. Pour un processeur fonctionnant à 33 MHz, ce temps tombe à 15 ns.

En pratique, ces temps d'accès sont disponibles dans la technologie des mémoires RAM, ce qui implique, pour le code applicatif (programme), une recopie des instructions d'un espace mémoire morte dans un espace mémoire RAM à la mise sous tension du processeur.

Toutefois, cette solution ne convient pas pour de nombreuses applications :

Dans le cas d'un processeur embarqué, par exemple, à bord d'un aérodyne, la nécessité de disposer d'une multiplicité de boîtiers mémoires (toujours onéreux) pour la recopie du code applicatif est particulièrement dissuasive. En outre, la conservation du contenu de la mémoire RAM ne peut pas être garantie lors d'une coupure d'alimentation dont la durée dépasse une période de temps prédéterminée.

En outre, pour des applications critiques telles que, par exemple, des commandes de vol faisant intervenir des programmes applicatifs de plus de 100 koctets, la recopie du programme en mémoire RAM entraîne nécessairement une interruption de service inadmissible.

Par ailleurs dans un dispositif de ce genre, l'insertion d'un code correcteur d'erreur n'est pas satisfaisante, car cette logique se place sur le chemin critique du temps d'accès à la mémoire et ne permet pas de garantir des corrections suffisantes. La protection mémoire RAM d'exécution par pile ou batterie est, quant à elle, psychologiquement difficile à admettre pour des fonctions critiques.

L'invention a donc plus particulièrement pour but de supprimer ces inconvénients au moyen d'un dispositif apte à fournir, sur le bus des données d'un processeur, une instruction par cycle en provenance de mémoires mortes utilisées comme mémoire d'exécution, et ce, sans nécessiter l'emploi par le processeur de signal spécifique, autre que les adresses qu'il délivre sur son bus des adresses et les signaux de commande qu'il génère lors des accès mémoire.

Pour parvenir à ce résultat, l'invention telle que définie dans la revendication 1 propose un dispositif pour l'optimisation des performances d'un processeur délivrant sur le bus des adresses, les adresses des instructions d'un code applicatif qu'il désire échantillonner sur un bus des données, lesdites instructions étant contenues dans au moins deux mémoires mortes.

Selon l'invention, ce dispositif est caractérisé en ce que :
- les entrées d'adressage desdites mémoires sont respectivement connectées au bus des adresses du microprocesseur par l'intermédiaire de deux compteurs respectifs, tandis que les sorties de lecture desdites mémoires sont connectées au bus des données du microprocesseur, par l'intermédiaire de deux barrières respectives ;
- les compteurs sont destinés à recevoir respectivement les adresses paires et impaires engendrées sur le bus, sauf le bit de poids faible d'adresse qui est chargé dans un registre dont la sortie est reliée à un circuit logique qui est prévu pour commander, en fonction de la nature des adresses émises sur le bus des adresses et au rythme de celles-ci, une succession de cycles comprenant chacun la commande de l'incrémentation des compteurs et l'ouverture de l'une des barrières pour transmettre les données émises sur le bloc mémoire associé à cette barrière sur le bus des données du microprocesseur et incrémenter le compteur associé à l'autre bloc mémoire, de manière à anticiper le transfert de données qui s'effectuera au cycle suivant ;
- le circuit logique comprend des moyens pour interdire l'échantillonnage d'une donnée lorsque l'adresse anticipée par le compteur ainsi incrémenté est incorrrecte par rapport à celle fournie par le microprocesseur.

Le document WO-A- 89/05488 divulgue un système mémoire selon le préambule de la revendication 1.

Un mode d'exécution de l'invention sera décrit ci-après, à titre d'exemple non limitatif, avec référence aux dessins annexés dans lesquels :

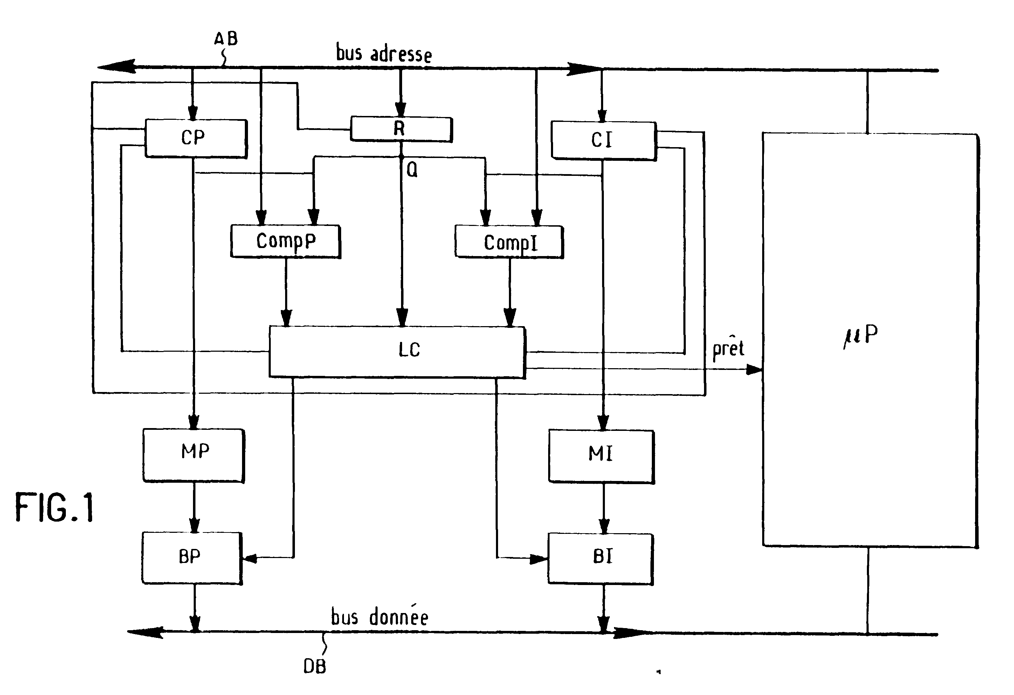

La figure 1 est un schéma synoptique d'un dispositif selon l'invention ;
La figure 2 est un diagramme temporel illustrant une séquence linéaire de code du dispositif représenté figure 1 ;
La figure 3 est un diagramme temporel illustrant un cycle de fonctionnement du dispositif représenté sur la figure 1 avec rupture de séquence.

Dans cet exemple, le dispositif comprend deux blocs de mémoire morte MI, MP, dont les entrées'd'adressage sont respectivement connectées au bus des adresses AB du microprocesseur µP par l'intermédiaire de deux compteurs respectifs CP, CI, et dont les sorties de lecture sont connectées au bus des données DB du microprocesseur µP par l'intermédiaire de deux barrières respectives BP, BI.

Les compteurs CP et CI sont destinés à recevoir respectivement les adresses paires et impaires engendrées sur le bus AB, sauf le bit de poids faible d'adresse qui est chargé dans un registre R dont la sortie Q est reliée à un circuit logique LC qui effectue la commande de l'incrémentation des compteurs CP et CI et de l'ouverture de l'une ou l'autre des barrières BP et BI pour transmettre les données émises sur les blocs mémoire MP ou MI sur le bus des données du microprocesseur µP.

Ces compteurs CP et CI sont conçus de manière à délivrer les adresses respectives des blocs mémoires MP et MI auxquels ils sont associés, sauf le bit de poids faible de l'adresse provenant du microprocesseur µP, (qui n'est pas reçu par les blocs mémoires MP et MI).

Les barrières BP, BI reçoivent sur leurs entrées les données contenues par les blocs mémoires respectifs MP, MI aux adresses indiquées par les compteurs CP, CI.

Le registre R fonctionne à la façon d'une bascule bistable à chaque cycle. La sortie Q de ce registre R est utilisée par le circuit logique LC pour déterminer quelle barrière BP ou BI va fournir la donnée issue du bloc mémoire MP ou MI au microprocesseur µP pour échantillonnage sur le cycle courant.

Ainsi, si la sortie Q du registre est à l'état 0, on est sur un cycle adresse paire et c'est le registre tampon BP qui est habilité à transmettre les données qu'il contient. Si la sortie Q est à l'état logique 1, c'est la barrière BI qui est ouverte pour que le bloc mémoire MI transmette son contenu sur le bus des données DB.

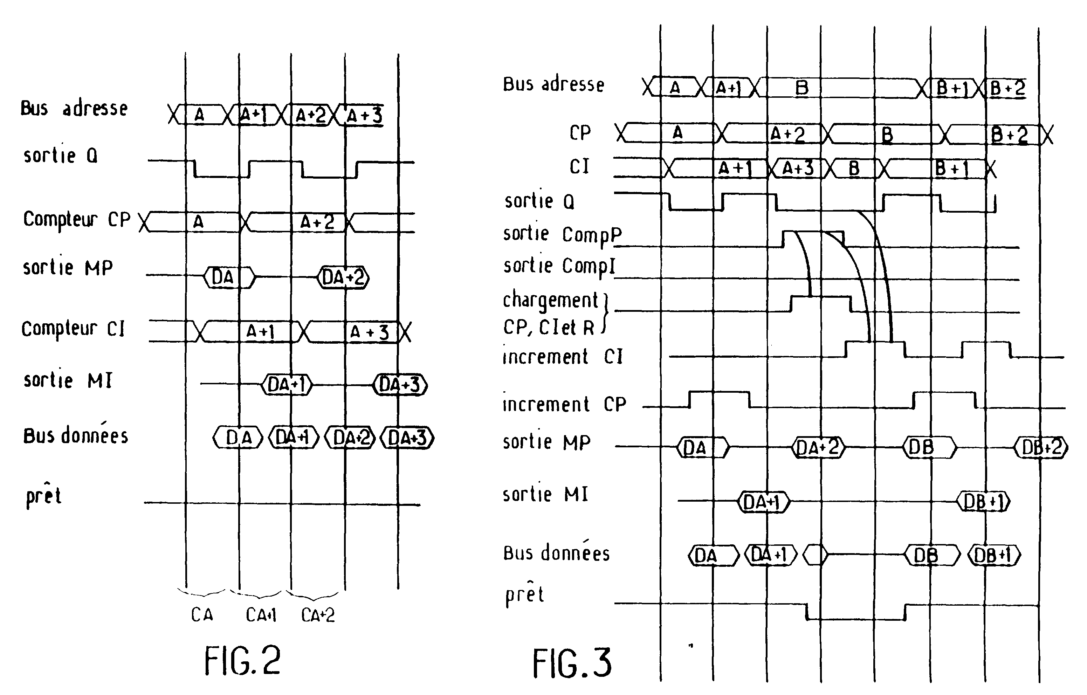

Comme il ressort du diagramme temporel représenté sur la figure 2, dans le cas d'une séquence linéaire de code, à partir du moment où une adresse A est générée sur le bus des adresses AB par le processeur µP (adresse micro), le cycle de fonctionnement CA du dispositif précédemment décrit est le suivant :
- Si l'adresse A est paire
   . En début de cycle CA, le compteur CP contient l'adresse A qu'il avait acquise au cycle précédent. Il présente cette adresse à la mémoire MP. Le circuit logique LC dont l'entrée est à l'état logique 0 incrémente le compteur CI qui passe à l'adresse A+1 (sortie CI).
   . En fin de cycle CA, la barrière BP est ouverte pour que le bloc mémoire MP transmette la donnée DA qui était contenue à l'adresse A (sortie MP). Le microprocesseur µP échantillonne alors la donnée DA. La barrière BI est fermée pendant le cycle A.
- Au cycle suivant (cycle CA+1)
   . En début de ce cycle, le compteur CP est incrémenté (sortie CP) et présente au bloc mémoire MP, pendant le cycle CA+2, l'adresse A+2.
      Le compteur CI contient depuis le cycle CA, l'adresse A+1 (sortie CI) et la maintient pendant le cycle A+1. En fin de cycle A+1, la barrière BI est ouverte pour que le bloc mémoire MI transmette la donnée DA+1 (bus de données). Le microprocesseur µP peut alors échantillonner la donnée DA+1. La barrière BP est fermée pendant le cycle A+1.

La difficulté rencontrée pour l'application de cette technique se trouve dans les ruptures de séquence qu'il faut détecter avant que le microprocesseur échantillonne une donnée erronée liée à l'anticipation d'adresse fournie par les compteurs.

C'est la raison pour laquelle le dispositif comprend un circuit de détection d'erreurs faisant intervenir deux comparateurs logiques CompP, CompI (donc très rapides) qui comparent respectivement les sorties des compteurs CP et CI et l'adresse fournie par le processeur µP.

Si la sortie Q du registre R est à l'état logique 0, c'est la sortie du comparateur CompP qui est valide pendant le cycle.

Si le résultat de la comparaison effectuée par le comparateur CompP révèle une identité, l'adresse anticipée par le compteur CP est correcte par rapport à celle fournie sur le bus AB (adresse micro) par le microprocesseur µP. En conséquence, la donnée contenue dans la mémoire MP à cette adresse peut passer la barrière BP et être échantillonnée par le microprocesseur µP à la fin du cycle.

Si le résultat de la comparaison effectuée par le comparateur CompP révèle une différence, par exemple due au fait que le microprocesseur µP vient d'effectuer une rupture de séquence et, qu'en conséquence, il présente sur le bus des adresses AB l'adresse B et non l'adresse A (figure 3), l'adresse A anticipée par le compteur CP (qui a été incrémenté au cycle précédent) est donc incorrecte par rapport à celle fournie par le microprocesseur µP sur le bus des adresses AB. Il convient alors de bloquer la réponse "prêt" envoyée par la logique LC au microprocesseur µP pour interdire que ce dernier échantillonne une donnée incorrecte.

Outre ce blocage, la différence détectée par le comparateur CompP provoque le chargement des compteurs CP, CI et du registre R par le bus des adresses AB (le registre R étant chargé par le bit de poids faible de l'adresse présente sur le bus des adresses AB). Ce chargement a lieu en fin de cycle B.

Après ce chargement, si la sortie Q du registre R est à l'état logique 0, ceci signifie que l'adresse B est paire. De ce fait, le compteur CI est incrémenté à la fin du cycle suivant. Par contre, si la sortie Q est à l'état logique 1, c'est le compteur CP qui est incrémenté à la fin du cycle suivant. La donnée DB contenue dans la mémoire M à l'adresse B est fournie en trois cycles au lieu d'une séquence linéaire. La donnée DB+1 est ensuite fournie en un cycle après la fourniture de la donnée DB.

Si la sortie Q du registre R est à l'état logique 1, c'est le comparateur CompI qui est valide pendant le cycle.

Si le résultat de la comparaison effectuée par le comparateur CompI révèle une identité, l'adresse anticipée par le compteur CI est correcte par rapport à celle fournie par le processeur µP. La donnée fournie par la mémoire MI via la barrière BI peut être échantillonnée par le processeur µP en fin de cycle.

Si le résultat de la comparaison effectuée par le comparateur CompI révèle une différence en raison du fait que le processeur µP vient d'effectuer une rupture de séquence et présente sur le bus AB l'adresse B et non l'adresse A. L'adresse A anticipée par le compteur CI est incorrecte par rapport à celle fournie par le processeur µP. Le circuit logique LC agit de manière à bloquer la réponse "prêt" envoyée au processeur pour interdire l'échantillonnage d'une donnée incorrecte. Par ailleurs, les compteurs CP et CI sont chargés par le bus des adresses AB, tandis que le registre R reçoit le bit de poids faible de l'adresse présente sur le bus AB. Ce chargement a lieu en fin de cycle B.

Après ce chargement, si la sortie Q du registre est à l'état logique 0, l'adresse B est paire et le compteur CI est incrémenté à la fin du cycle suivant. La donnée DB est alors fournie en trois cycles au lieu d'une séquence linéaire. La donnée suivante DB+1 est alors fournie au cycle après la donnée DB.

Le dispositif précédemment décrit permet de soutenir la performance du microprocesseur malgré l'utilisation de mémoires plus lentes, une légère dégradation étant cependant observée lors de ruptures de séquence du processeur µP, telles que celles occasionnées par des instructions de branchement.

Ainsi, dans le cas d'un programme utilisant 15% d'instructions de branchement, ce dispositif permet d'atteindre une efficacité de 77% au lieu de 100% (obtenue avec un code en RAM sans temps d'attente). Avec un programme utilisant 10% d'instructions de branchement, on aurait une efficacité de 83%.

Bien entendu, l'invention ne se limite pas au mode d'exécution précédemment décrit.

Ainsi, le nombre de circuits comprenant un compteur CP, CI, un bloc mémoire MP, MI et une barrière BP, BI pourrait être supérieur à 2.

Ce nombre pourrait, par exemple, être égal à 4. Dans ce cas, le registre R doit être conçu de manière à recevoir un couple de bits de poids faible des adresses engendrées sur le bus adresse AB.

Le circuit logique LC comprend des moyens de décodage des deux bits contenus dans le registre R et pour commander l'incrémentation de l'un des quatre compteurs CP, CI ainsi que l'ouverture de l'une des quatre barrières BP, BI, en fonction de la valeur dudit couple de bits.

Quatre comparateurs CompP, CompI seront en outre prévus pour comparer les sorties des quatre compteurs CP, CI avec l'adresse fournie par le processeur µP et pour valider l'adresse anticipée par le compteur CP, CI ou pour interdire l'échantillonnage d'une donnée incorrecte par le processeur, selon un processus similaire à celui précédemment décrit.

## Revendications

1. Dispositif pour l'optimisation des performances d'un processeur (µP) délivrant sur le bus des adresses (AB), les adresses des instructions d'un code applicatif qu'il désire échantillonner sur un bus des données (DB), lesdites instructions étant contenues dans au moins deux mémoires mortes (MP, MI),
caractérisé en ce que :
- les entrées d'adressage desdites mémoires (MP, MI) sont respectivement connectées au bus des adresses (AB) du microprocesseur (µP) par l'intermédiaire de deux compteurs respectifs (CP, CI), tandis que les sorties de lecture desdites mémoires sont connectées au bus des données (DB) du microprocesseur (µP) par l'intermédiaire de deux barrières respectives (BP, BI) ;
- les compteurs (CP, CI) sont destinés à recevoir respectivement les adresses paires et impaires engendrées sur le bus (AB), sauf le bit de poids faible d'adresse qui est chargé dans un registre (R) dont la sortie (Q) est reliée à un circuit logique (LC) qui est prévu pour commander, en fonction de la nature des adresses émises sur le bus des adresses (AB) et au rythme de celles-ci, une succession de cycles comprenant chacun la commande de l'incrémentation des compteurs (CP) et (CI) et l'ouverture de l'une des barrières (BP) et (BI) pour transmettre les données émises sur les blocs mémoire (MP) ou (MI) associé à cette barrière sur le bus des données (DB) du microprocesseur (µP) et incrémenter le compteur (CP, CI) associé à l'autre bloc mémoire (MP, MI), de manière à anticiper le transfert de données qui s'effectuera au cycle suivant ;
- le circuit logique (LC) comprend des moyens pour interdire l'échantillonnage d'une donnée lorsque l'adresse anticipée par le compteur (CI) ainsi incrémenté est incorrecte par rapport à celle fournie par le microprocesseur.

2. Dispositif selon la revendication 1,
caractérisé en ce que le registre (R) commande l'incrémentation de l'un ou l'autre des compteurs (CP) et (CI) et l'habilitation de l'une ou l'autre des barrières (BP, BI), selon que l'adresse est paire ou impaire.

3. Dispositif selon l'une des revendications 1 et 2,
caractérisé en ce qu'il comprend deux comparateurs logiques (CompP, CompI) destinés à comparer les adresses fournies aux sorties des compteurs (CP, CI) à l'adresse fournie par le processeur (µP), et en ce que le circuit logique (LC) permet d'habiliter en fin de cycle le transfert des données seulement si la comparaison effectuée par le comparateur (CompP, CompI) correspondant révèle une identité et d'interdire ledit transfert, dans le cas où ladite comparaison révèle une différence.

4. Dispositif selon la revendication 3,
caractérisé en ce que le susdit circuit logique (LC) comprend des moyens permettant le chargement par le bus des adresses (AB) des susdits compteurs (CP, CI) et du susdit registre (R).

5. Dispositif selon la revendication 1,
caractérisé en ce qu'il comprend quatre circuits comprenant chacun un compteur (CP, CI), un bloc mémoire (MP, MI) et une barrière (BP, BI), et en ce que le registre (R) est conçu de manière à recevoir un couple de bits de poids faible des adresses engendrées sur le bus adresse (AB), le circuit logique (LC) comportant alors des moyens de décodage pour commander l'incrémentation de l'un des quatre compteurs (CP, CI) ainsi que l'ouverture de l'une des quatre barrières (BP, BI) en fonction de la valeur dudit couple de bits.

6. Dispositif selon la revendication 5,
caractérisé en ce que quatre comparateurs (CompP, CompI) sont en outre prévus pour comparer les sorties des quatre compteurs (CP, CI) avec l'adresse fournie par le processeur (µP) et pour valider l'adresse anticipée par l'un des compteurs (CP, CI) ou pour interdire l'échantillonnage d'une donnée incorrecte par le processeur (µP).

## Claims

1. Device for optimizing the performance characteristics of a processor (µP) issuing, on the address bus (AB), the addresses of the instructions of an application code it wishes to sample off from a data bus (DB), the said instructions being contained in at least two read-only memories
characterised in that:
- the addressing inputs of the said memories (MP, MI) are respectively connected to the address bus (AB) of the microprocessor (µP) via two respective counters (CP, CI), so long as the read outputs of the said memories are connected to the data bus (DB) of the microprocessor (µP) via two respective buffers (BP, BI).
- the counters (CP, CI) are intended to respectively receive the even and odd addresses generated on the bus (AB), except for the least significant address bit which is loaded in a register (R) of which the output (Q) is connected to a logic circuit (LC) which is provided to control, as a function of the nature of the addresses transmitted on said address bus (AB) and at the rhythm of the latter, a succession of cycles each comprising the control of the incrementing of the counter (CP) and (CI) and the opening of one of the buffers (BP) and (BI) for transmitting the emitted data on the memory blocks (MP) or (MI) associated with this buffer on the data bus (DB) of the processor (µP) and to increment the counter (CP, CI) associated with the other memory block (MP, MI), in order to anticipate the data transfer of the next cycle.
- the logic circuit (LC) comprises means for prohibiting the sampling of a datum when the anticipated address by the counter (CI) as well as incremented is wrong with regard to the one provided by the processor

2. The device according to claim 1,
characterized in that the register (R) is controls the incrementing of one or other of said counters (CP) and (CI) and the authorizing of one or other of said buffers (BP, BI), depending on whether the address is even or odd.

3. The device according to one of claim 1 and 2,
characterized in that two logic comparators (CompP, CompI) intended to compare the addresses supplied at the outputs of said counters (CP, CI) with the address provided by the processor (µP), and in that the logic circuit (LC) enables the authorizing at the end of the cycle of the transfer of the data only if the comparison performed by the corresponding comparator (CompP, CompI) reveals an identity, and to prohibit said transfer in the event of said comparison revealing a discrepancy.

4. The device according to claim 3,
characterized in that the said logic circuit comprises a means enabling said counters (CP, CI) and said register (R) to be loaded by said address bus (AB).

5. The device according to claim 1,
characterized in that it comprises four circuits each comprising a counter (CP, CI), a memory block (MP, MI) and a buffer (BP, BI), and in that the register is designed to receive a couple of bits of low significance of the addresses generated on the address bus (AB), the logic circuit (LC) then comprising a decoding means for controlling the incrementing of one of said four counters (CP, CI) and the opening of one of said four buffers (BP, BI) as a function of the value of said couple of bits.

6. The device according to claim 5, characterized in that four comparators (CompP, CompI) are further provided for comparing the outputs of said four counters (CP, CI) with the address provided by the processor (µP) and for validating the address anticipated by one of said counters (CP, CI) or for prohibiting the sampling off of a wrong datum by the processor (µP).

## Patentansprüche

1. Vorrichtung zur Leistungsoptimierung eines Prozessors (µP), der auf dem Adreßbus (AB) die Befehlsadressen eines Anwendungscodes erzeugt, den er auf einem Datenbus (DB) abtasten soll, wobei diese Befehle in mindestens zwei Festwertspeichern (MP, MI) enthalten sind,
dadurch gekennzeichnet, daß
- die Adreßeingänge der Speicher (MP, MI) mittels zweier entsprechender Zähler (CP, CI) jeweils mit dem Adreßbus (AB) des Mikroprozessors (µP) verbunden sind, während die Leseausgänge der Speicher mittels zweier entsprechender Barrieren (BP, BI) an den Datenbus (DB) des Mikroprozessors (µP) angeschlossen sind;
- die Zähler (CP, CI) zum Empfangen der geraden und ungeraden Adressen vorgesehen sind, die auf dem Bus (AB) erzeugt werden, und zwar ohne das einen geringen Wert aufweisende Adreßbit, das in ein Register (R) geladen wird, dessen Ausgang (Q) mit einer Logikschaltung (LC) verbunden ist, die dazu vorgesehen ist, in Abhängigkeit von der Art der auf dem Adreßbus (AB) ausgesandten Adressen und im Takt derselben eine Reihe von Zyklen zu befehlen, deren jeder den Befehl zur Inkrementierung der Zähler (CP) und (CI) umfaßt, und das Öffnen einer der Barrieren (BP) und (BI) zu befehlen, um die auf den Speicherblöcken (MP) oder (MI), die dieser Barriere zugeordnet sind, auf dem Datenbus (DB) des Mikroprozessors (µP) zu übertragen und den dem anderen Speicherblock (MP, MI) zugeordneten Zähler (CP, CI) zu inkrementieren, um die Datenübertragung, die im nächsten Zyklus erfolgen wird, vorwegzunehmen;
- die Logikschaltung (LC) Mittel aufweist, um das Abtasten eines Wertes zu verbieten, wenn die durch den so inkrementierten Zähler (CI) vorweggenommene Adresse im Vergleich zu der, die durch den Mikroprozessor geliefert wird, fehlerhaft ist.

2. Vorrichtung nach Anspruch 1, dadurch gekennzeichnet, daß das Register (R) die Inkrementierung des einen oder des anderen der Zähler (CP) und (CI) sowie die Berechtigung der einen oder der anderen der Barrieren (BP, BI) in Abhängigkeit davon befiehlt, ob die Adresse gerade oder ungerade ist.

3. Vorrichtung nach einem der Ansprüche 1 und 2, dadurch gekennzeichnet, daß sie zwei Logikkomparatoren (CompP, CompI) aufweist, die dazu dienen, die an den Ausgängen der Zähler (CP, CI) erzeugten Adressen mit der durch den Prozessor (µP) erzeugten Adresse zu vergleichen, und daß die Logikschaltung (LC) es erlaubt, am Ende eines Zyklus die Datenübertragung nur dann zu gewähren, wenn der durch den entsprechenden Komparator (CompP, CompI) durchgeführte Vergleich eine Übereinstimmung zeigt, und diese Übertragung zu verbieten, falls der Vergleich eine Abweichung ergibt.

4. Vorrichtung nach Anspruch 3, dadurch gekennzeichnet, daß die Logikschaltung (LC) Mittel aufweist, die das Laden durch den Adreßbus (AB) der Zähler (CP, CI) und des Registers (R) erlauben.

5. Vorrichtung nach Anspruch 1, dadurch gekennzeichnet, daß sie vier Schaltungen aufweist, die jeweils einen Zähler (CP, CI), einen Speicherblock (MP, MI) und eine Barriere (BP, BI) umfassen, und daß das Register (R) so ausgelegt ist, daß es ein Paar Bits mit geringem Wert der auf dem Adreßbus (AB) erzeugten Adressen empfängt, wobei die Logikschaltung (LC) dann Dekodiermittel aufweist, um die Inkrementierung eines der vier Zähler (CP, CI) sowie das Öffnen einer der vier Barrieren (BP, BI) in Abhängigkeit vom Wert des Bitpaares zu befehlen.

6. Vorrichtung nach Anspruch 5, dadurch gekennzeichnet, daß zusätzlich vier Komparatoren (CompP, CompI) vorgesehen sind, um die Ausgänge der vier Zähler (CP, CI) mit der vom Prozessor (µP) erzeugten Adresse zu vergleichen, und um die von einem der Zähler (CP, CI) vorweggenommene Adresse zu prüfen oder das Abtasten eines fehlerhaften Wertes durch den Prozessor (µP) zu verbieten.
